# EUROPEAN PATENT SPECIFICATION

(11) **EP 0 443 514 B1**
(45) Date of publication and mention of the grant of the patent: **08.03.1995**
(21) Application number: 91102342.2
(22) Date of filing: 19.02.1991
(51) Int. Cl.: G01B 7/14, G01M 13/04

(54) **Apparatus for monitoring a bearing**
Apparat zur Überwachung eines Lagers
Appareil de surveillance d'un palier

(30) Priority: 20.02.1990 JP 37191/90
(43) Date of publication of application: 28.08.1991
(73) Proprietor: NIKKISO CO., LTD., Shibuya-ku Tokyo 150 (JP)
(72) Inventor: Konishi, Yoshiaki, Shibuya-ku, Tokyo (JP)
(74) Representative: Müller, Hans-Jürgen, Dipl.-Ing.

(56) References cited:
- EP-A- 0 080 055
- DE-A- 3 201 811
- FR-B- 2 185 452
- GB-A- 2 197 479
- US-A- 3 488 581
- N.T.I.S. TECHNICAL NOTES, no. 6, part F, June 1986, page 690, Springfield, Virginia, US; A.J. HILL: "Shaft axial-displacement sensor"

## Description

This invention relates to an arrangement for monitoring axial and radial displacements of a rotatable shaft to monitor abrasion of e.g. slide bearings utilized for canned motor pumps and the like during its operation.

In general, a canned motor pump at its rotary portion is completely immersed in a treating liquid and has not any sealing portions, so that complete non-leakage may be achieved, and this has been recommended for use in various processing pumps. In such a type of canned motor pumps, all radial and thrust loads of the rotary portions during operation may be received by the slide bearing of supporting a rotary shaft of the rotary portions. Since the bearing is immersed in the treating liquid as mentioned above, a special monitoring apparatus should be provided for monitoring abrasion of the bearing.

In the following, such a monitoring arrangement will be described briefly. The monitoring apparatus may generally be made mechanically or electrically, but one embodiment of the apparatus will be described mechanically with reference to figure 18.

The monitoring apparatus has a slide bearing 10 for supporting a canned motor shaft 12 provided at its end with an end nut 14, within a hollow portion 16 of which is arranged a sensing portion 20 of a detector 18. The sensing portion 20 is sealed under pressure therein. In such construction, radial abrasion of the bearing 10 generates an eccentric movement of the shaft 12, whereas thrust abrasion of the bearing 10 displaces the shaft 12 axially, resulting in contact (and hence breakage) of the sensing portion 20 with an inner wall or end face of the hollow portion 16. Thus, an inner pressure of the sensing portion 20 is fluctuated for detecting the limiting abrasion in the radial and thrust direction of the bearing 10. In the apparatus of an electrical construction not specifically shown, on the other hand, a plurality of coils for detecting a magnetic flux is connected in series and placed within a stator, for example. In such a construction, abrasion of the bearing causes the shaft and a rotor to rotate eccentrically, thereby to increase and electromotive force in the detecting coil for detecting an abrasion degree of the bearing.

These conventional monitoring apparatus of the bearing as described above have, however, several disadvantages and problems. Firstly, the mechanical construction may detect both the radial and thrust abrasion relating to the limiting abrasion, but not an abrasion degree leading to the limiting abrasion or a residual life. The electrical construction, on the other hand, may detect the abrasion degree of the bearing only in the radial direction, but not thrust direction. Further, in such type of the monitoring apparatus of the bearing, it is desirable to detect both the rotating and thrust direction of the bearing. Such detection cannot be achieved by the conventional apparatus as described above.

However, US-A-3 488 581 describes an arrangement according to the opening part of claim 1 which arrangement is able to monitor radial and axial components of vibrations by non-contact elements. The shaft of said monitoring arrangement comprises a calibration ring which ring comprises a pair of segments which segments include serrations extending parallel to the axis of the shaft on the one hand and radially outward from the shaft on the other hand. When the shaft rotates there will result an apparent periodic variation in the axial position of the surface of the one segment and a similar variation in the radial position of the reference surface segment on the other hand.

Furthermore, it is known in the art (NTIS Technical Notes, 1986, page 690) to sense the axial displacement of a shaft as well as the rotational speed thereof which arrangement can be used for pump control. According to this arrangement there are beveled lobes on the shaft so that the sensor tip measures the distance between it and the shaft and their beveled lobes, respectively, creating voltages so that the wave form produced is a measure of the axial displacement and rotational speed as well.

Other arrangements as e.g. according to FR-A-2 185 452 optically, electrostatically or magnetically sense a shaft by means of a reference shaft so that the distance of the two parallel shafts is a measure of the radial displacement to be detected.

It is an object of the present invention to provide an arrangement as mentioned above which may detect not only the radial and thrust abrasion degree of a bearing but also the rotating and thrust direction of the shaft by simple means.

The invention is characterized in claim 1 and preferred embodiments are claimed in dependent claims.

According to the invention the markings provided on or in the surface of the shaft can be considered as signal generating means for generating signals corresponding to an axial position of said shaft. The detector disposed at a distance from said markings is responsive to the passage of a marking and outputs a signal which is indicative of the distance of the marking to the detector. According to the invention the angular distance between the markings increases in axial direction of the shaft. Said markings are contactless detected by the detector. The markings may comprise one or more concave groove and/or convex ridges which may be disposed axially on the shaft as well as helically on it. The markings may comprise a permanent magnet provided on a surface of the shaft or may comprise a linear light source provided within a portion of the rotary shaft, while the detecting means comprises a photo-sensor; or the markings may comprise a reflective plate and a light source illuminating said reflective plate, while the detecting means comprises a photo-sensor.

For better understanding, operation of the monitoring apparatus of the bearing according to the invention will be described with reference to an embodiment in which the markings generating signals comprise a single convex ridge parallel to an axis and a single helical convex ridge, both said ridges being arranged in the same semi-cylindrical surface of the shaft and having different height.

At first, upon each rotation of the shaft both convex ridges pass through the nearest position from the distance sensor. Thus, two unit pulses may be generated from the distance sensor synchronically to a rotation cycle of the shaft. Since both pulse signals are set to have different amplitudes, check of a signal sequence from each pulse allows simultaneous detection of the rotating direction of the shaft.

Then, upon the radial abrasion of the bearing, the shaft is subjected to an eccentric movement proportional to a degree of abrasion, thereby to reduce the shortest distance between the ridges and the distance sensor. As a result, an amplitude of the pulse signal from the distance sensor is increased, depending on the degree of abrasion. Thus, the degree of radial abrasion of the bearing may be detected.

Upon the thrust abrasion of the bearing, on the other hand, the shaft is subjected to displacement in the axial direction proportionally to a degree of abrasion, thereby to increase or reduce a surface distance between both ridges in an axially perpendicular plane through the distance sensor. As a result, a time interval between both pulse signals from the ridges is increased or reduced, depending on the degree and direction of the bearing abrasion. Thus, the degree and direction of the thrust abrasion may be detected simultaneously.

Now, the monitoring apparatus of the bearing according to the invention will be described for its preferred embodiments in more detail with reference to the accompanied drawings.
Figs. 1 (a) and (b) are an end view and an perspective views, respectively, of one embodiment of the monitoring arrangement according to the invention,
Figs. 2 (a) and (b) are sectional views along the line II-II of Fig. 1 showing a normal state and a radial abrasion state, respectively, of the bearing in the monitoring apparatus,
Figs. 3 (a) and (b) are side views in a normal state and a thrust abrasion state of the bearing, respectively, of the monitoring apparatus as shown in Fig. 1,
Figs. 4 (a) and (b) are an end view and a perspective view, respectively, of another embodiment of the monitoring apparatus according to the invention,
Figs. 5 (a) and (b) are end views upon normal and reverse rotation, respectively, of the rotary shaft in a modified embodiment of the monitoring apparatus as shown in Figs. 1 (a) and (b),
Fig. 6 is a perspective view of another modified embodiment of the monitoring apparatus as shown in Figs. 1 (a) and (b),
Figs. 7 (a) and (b) are end views upon normal and reverse rotation, respectively, of the rotary shaft in the monitoring apparatus as shown in Fig. 6,
Figs. 8 (a) and (b) are an end view and a perspective view, respectively, of a further modified embodiment of the monitoring apparatus as shown in Figs. 1 (a) and (b),
Figs. 9 (a) and (b) are an end view and a perspective view, respectively, of a still further embodiment of the monitoring apparatus as shown in Figs. 1 (a) and (b),
Fig. 10 is a perspective view of a further embodiment of the monitoring apparatus according to the invention,
Figs. 11 (a) and (b) are side views upon a normal state and a thrust abrasion state, respectively, of the bearing in the monitoring apparatus as shown in Fig. 10,
Figs. 12 (a) and (b) are sectional views in a plane perpendicular to a rotation axis and in a plane through the axis, respectively, in the modified embodiment of the monitoring apparatus of Figs. 4 (a) and (b),
Fig. 13 is a sectional view taken through the rotation axis of the rotary shaft in a still further embodiment of the monitoring apparatus according to the invention,
Figs. 14 (a) and (b) are side views upon a normal state and a thrust abrasion state, respectively, of the bearing of the monitoring apparatus as shown in Fig. 13,
Fig. 15 is a sectional view taken through the rotation axis of the rotary shaft in a further embodiment of the monitoring apparatus according to the invention,
Figs. 16 (a) and (b) are side views upon the normal state and the thrust abrasion state, respectively, of the bearing of the monitoring apparatus as shown Fig. 15,
Fig. 17 is a flow sheet showing one embodiment of a signal treating device in the monitoring apparatus according to the invention,
Fig. 18 is a partially cutaway sectional view of a conventional monitoring apparatus of the bearing.

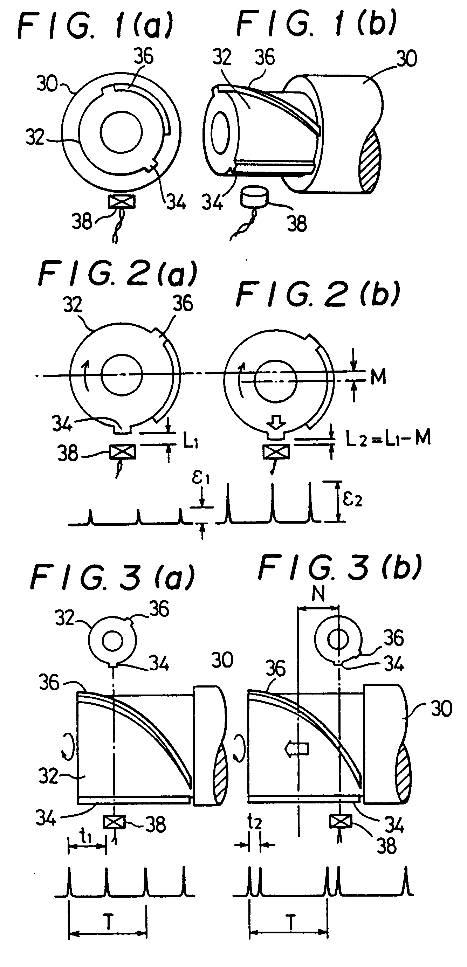

Referring to Fig. 1, a monitoring apparatus according to the invention is formed on an end nut 32 which is provided at an end of a rotary shaft 30 in a canned motor pump and the like supported by a slide bearing (not shown). In other words, on a surface of the end nut 32 are arranged markings as generating means comprising a linear ridge 34 parallel to an axis of the rotary shaft 30 and an axially curved helical ridge 36, while a distance sensor 38 such as a contactless displacement gauge is provided in a position opposite to the markings for inputting detected signals to a signal treating device (not shown). In this case, both of the ridges 34 and 36 are arranged within the same semi-cylindrical surface of the end nut 32.

Now, the monitoring apparatus of such construction will be described for its operation. When the rotary shaft 30 (or the end nut 32) rotates, as apparent from Fig. 2 (a), both markings, namely said ridges 34 and 36 pass at each rotation through a nearest position L₁ to the distance sensor 38. Thus, from the distance sensor 38 is generated two pulse signals having an amplitude ε₁, as illustrated, synchronically to a rotation cycle. If the bearing is subjected to radial abrasion, the rotary shaft 30 (or the end nut 32) generates an eccentrical movement with an amplitude of M proportional to a degree of abrasion, as shown in Fig. 2 (b), the shortest distance between the ridges 34, 36 and the distance sensor 38 is reduced from L₁ to L₂ = L₁ - M. Thus, as illustrated, from the distance sensor 38 are generated pulse signals of an amplitude of ε₂ which is increased corresponding to the degree of abrasion, thereby to allow the degree of the radial abrasion to be detected.

During rotation of the rotary shaft 30 (or the end nut 32), as described herein-above, the two pulse signals corresponding to the both ridges 34 and 36 are generated from the distance sensor 38, and a time interval t₁ of the signals [cf. Fig. 3 (a)] is set to a constant position within 1/2 of a rotation cycle T upon normal rotation, since both ridges 34 and 36 are arranged within the same semi-cylindrical surface. If the bearing is subjected to the thrust abration, the rotary shaft 30 (or end nut 32) is displaced by a distance N corresponding to the degree of abrasion, namely to the left as shown with an arrow in Feg. 3 (b). As a result, signals of a reduced time interval t₂ corresponding to the degree and direction of abrasion may be generated from the distance sensor 38, as shown, thereby to allow the thrust abrasion direction and its degree to be detected simultaneously. When the rotation cycle T is constant, the detection may be effected by measuring only time intervals t₁ , t₂ .... When the rotation cycle T is varied, however, a time ratio t/T should be measured for the detection.

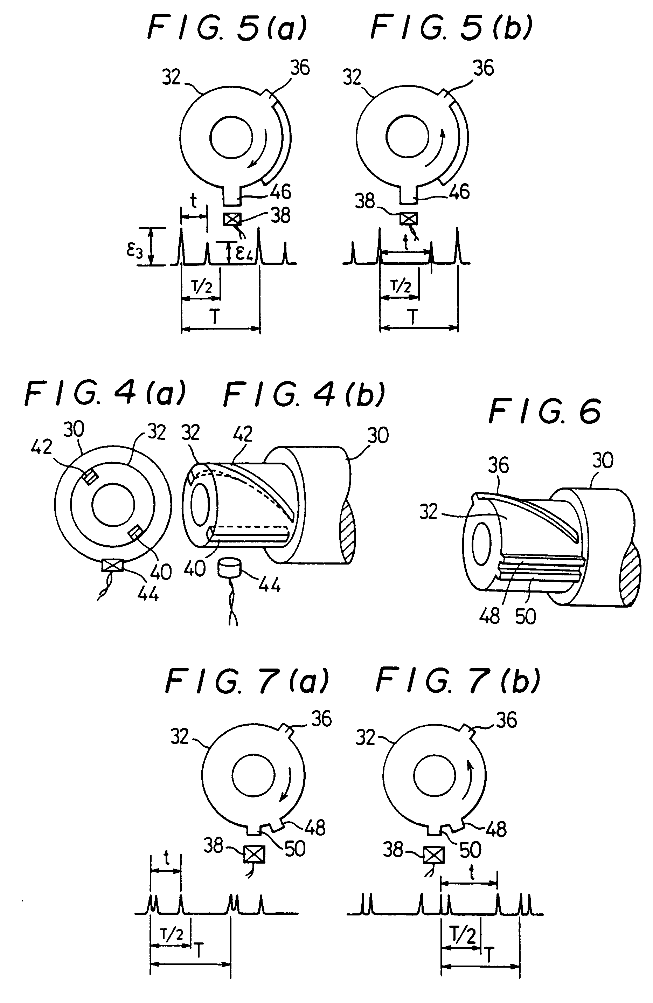

Now, another embodiment of the monitoring apparatus according to the invention will be described with reference to Figs. 4 (a) and (b). This embodiment is different from that of Fig. 1 in that permanent magnets are employed as the signal generating means in place of the ridges while a magnetic sensor is employed in place of the contact less distance sensor. Namely, on the surface of the end nut 32 are arranged a linearly parallel permanent magnet 40 and a helical permanent magnet 42 integrally or embeddingly to form the signal generating means, while the magnetic sensor 44 comprising Hall element or magnetic resistant element is provided in a position opposite to the signal generating means for inputting detected signals to a signal treating device (not shown). According to this embodiment, it will be appreciated that the same effect as in the previous embodiment may be achieved.

A further embodiment of Figs. 5 (a) and (b) is different from that of Fig. 1 in that the linear ridge 34 is higher in size than the helical ridge 36. According to such construction, the rotating direction of the rotary shaft may be readily detected in addition to the effect obtainable by the embodiment of Fig. 1. An amplitude ε₃ of the pulse signal corresponding to the higher linear ridge 46 is set to be higher than an amplitude ε₄ of the helical ridge 36. Assuming that the higher signal ε₃ is the base signal and the lower signal ε₄ is a reference signal, the measurement whether an time interval t from the signal ε₃ to ε₄ is set within 1/2 of the rotation cycle T or not may provide convenient detection of the rotating direction of ths shaft clockwise [Fig. 5 (a)] or anti-clockwise [Fig. 5 (b)].

An embodiment of Fig. 6 is different from that of Fig. 1 in that the linear ridge 34 is replaced with two linear ridges 48, 50 parallel to each other. With this embodiment, as in Figs. 5 (a) and (b), the rotating direction of the shaft may be readily detected. Referring to Figs. 7 (a) and (b), the pulse signals corresponding to the two ridges 48, 50 are generated as a two-series signal (base signal), which is followed by a reference signal. The measurement whether a time interval t between the base and reference signals is set within 1/2 of the rotation cycle T or not may provide convenient detection of the shaft clockwise [Fig. 7 (a)] or anti-clockwise [Fig. 7 (b)].

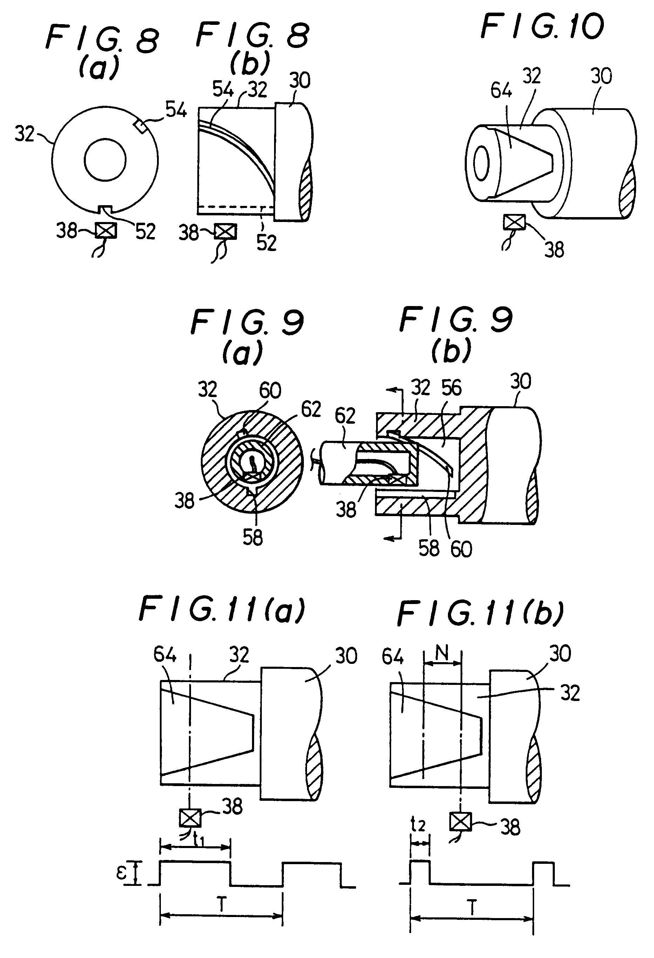

An embodiment of Figs. 8 (a) and (b) is different from that of Fig. 1 in that the linear and helical ridges 34 and 36 are replaced with concave grooves 52 and 54, respectively. An embodiment of Figs. 9 (a) and (b), on the other hand, is different from that of Fig. 1 in that the linear and helical ridges 34 and 36 are replaced with grooves 58 and 60, respectively, formed on an inner surface of a hollow portion 56 of the end nut 32, while the distance sensor 38 is mounted in a sensor-mounting shaft 62 which is arranged concentrically to the rotary shaft 30 (or the hollow portion 56 of the end nut 32). With the embodiment of two types as described just above, the effect similar to that of Fig. 1 may be achieved.

An embodiment of Fig. 10 is different from that of Fig. 1 in that the linear and helical ridges 34 and 36 as the signal generating means are replaced with a convex sector portion 64 having an axially varying width. With such construction, the detection of the degree of radial abrasion in the bearing may be carried out, as suggested from the embodiment of Fig. 1 as follows: when an output of the monitoring apparatus in the normal state of the bearing is in a state as shown in Fig. 11 (a), and the rotary shaft 30 is displaced by a distance N to the left, as shown in Fig. 11 (b), due to the thrust abrasion of the bearing, a pulse time t of the pulse signal from the distance sensor 38 corresponding to the sector portion 64 is reduced from t₁ to t₂ . Since these pulse times t₁ , t₂ ... may be varied depending on the degree and direction of the bearing abrasion, only the measurement of the pulse times t₁ , t₂ ... allows the degree and the direction of the thrust abrasion to be detected, as in the embodiment of Fig. 1. If the rotation cycle T is varied, a time ratio t/T should be measured for the detection. Alternatively, a convex sector portion may be replaced with the concave sector for achieving the similar effect.

Further, in the embodiments of Figs. 5 and 11 as described above, the concave and convex portions as well as the distance sensor as the signal generating means and the detection means may be replaced with a permanent magnet and a magnetic sensor, respectively, in principle. Further, as the sensor there may be utilized an ultrasonic or photo-sensor and the like.

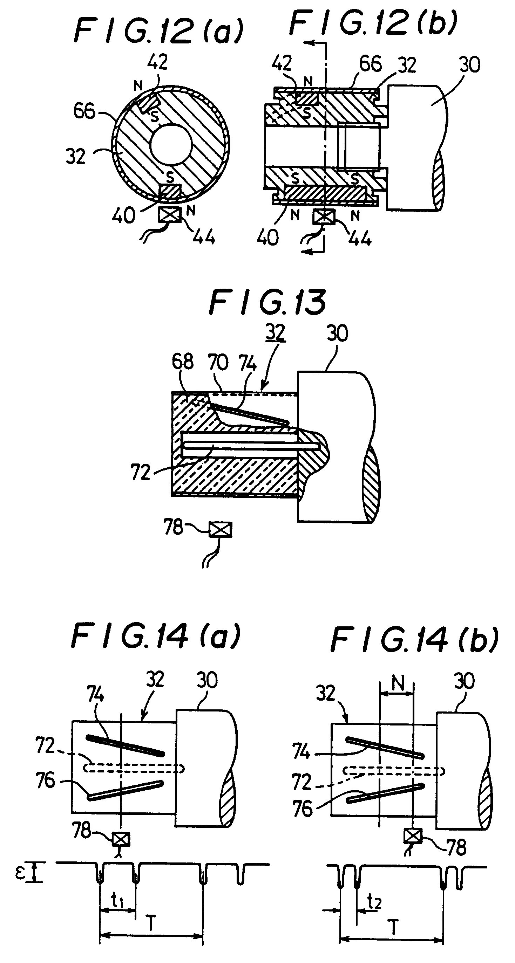

An embodiment of Figs. 12 (a) and (b) is similar to that of Fig. 4, provided that a surface of the end nut 32 is covered and sealed with a non-magnetic thin protecting cylinder 66 in order to protect the linear and helical permanent magnets 40 and 42. In such construction, the permanent magnets 40 and 42 may be protected from a surrounding atmosphere, resulting in the elongation of their available life.

In embodiments of Fig. 13 as well as Figs. 14 (a) and (b), the signal generating means consists of a linear light source while the detection means consists of a photo-sensor. Namely, the end nut 32 at its main body is formed with a transparent block 68, a surface of which is coated with a shading membrane 70 and which is provided therein with a linear light source 72. The shading membrane 70 is partially cut away and provided with two linear axially inclined, convergent and transmitting slits 74 and 76 to form a signal generating means, while a photo-sensor 78 is arranged in a position opposite to said photo-sensor 78.

In such construction, not only the radial abrasion of the bearing but also the degree and direction of the thrust abrasion may be detected as follows: when an output of the monitoring apparatus in the normal state of the bearing is in the state as shown in Fig. 14 (a), the thrust abrasion of the bearing and hence the displacement of the rotary shaft 30 by a distance N to the left, as shown in Fig. 14 (b), a time interval t between both pulse signals generated from the photo-sensor 78 corresponding ot the transmitting slits 74, 76 is reduced from t₁ to t₂ . Thus, the measurement of the time interval t₁ , t₂ ... or the time ratio t/T allows simultaneous detection of the degree and the direction of the thrust abrasion of the bearing.

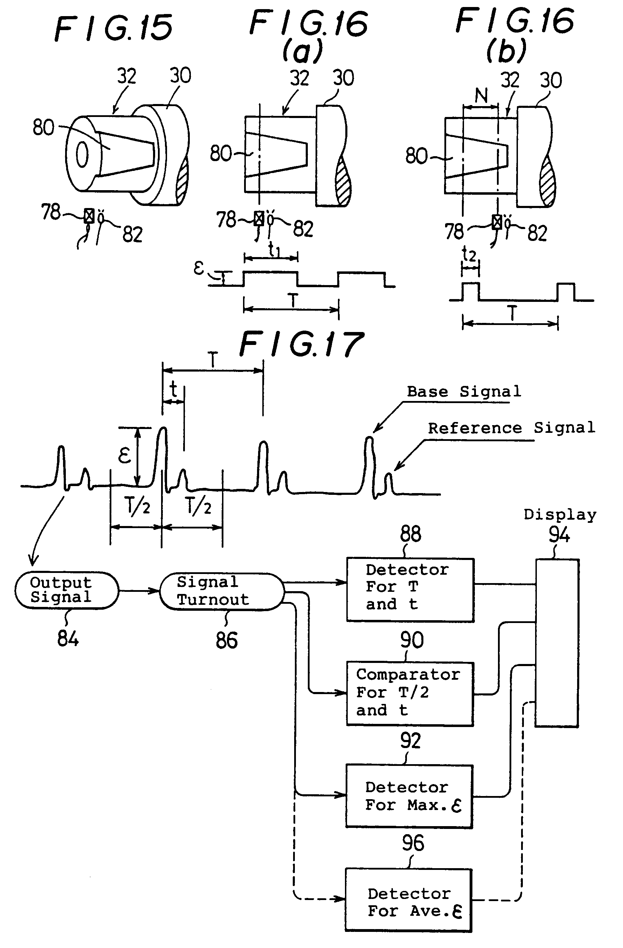

Embodiments of Fig. 15 and Figs. 16 (a), (b) are different from that of Figs. 13 and 14 (a), (b) in that the linear light source as the signal generating means is replaced with a reflective plate and a light source. In other words, the signal generating means comprises the reflective plate 80 of a convex sector type with an axially varying width provided on a surface of the end nut 32 and the light source 82 arranged in a position opposite to said reflective plate 80 while a photo-sensor 78 is arranged adjacent to the light source 82. With such construction, it will be appreciated that the same effect may be achieved as in the embodiments of Figs. 10, 11, 13 and 14, clearly understood with reference to the drawings.

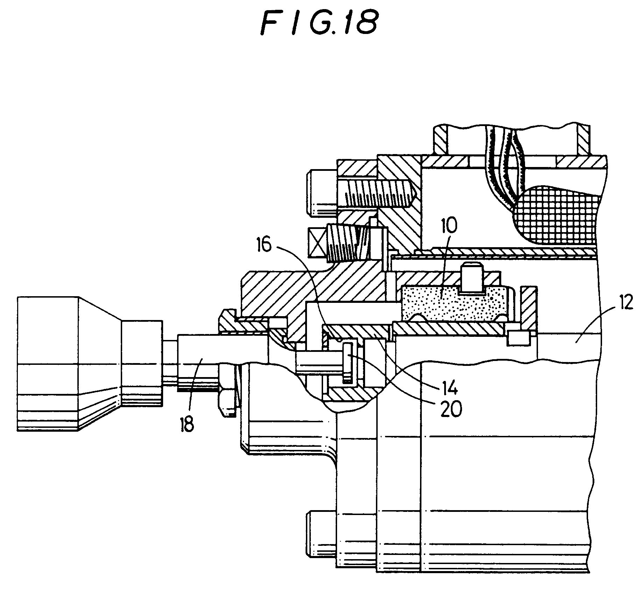

Finally, one embodiment of a signal treating device is shown in Fig. 17. This embodiment relates to the monitoring apparatus of the bearing accoding to Fig. 5, or the signal treating device for the signal generating means compised of the higher linear ridge 46 and the lower helical ridge 36 in which its output signal is illustrated for clockwise rotation [Fig. 5 (a)].

Referring to Fig. 17, the output signal 84 is input through a signal turnout 86 into a detector 88 for detecting the time interval t between the rotation cycle T and the base signal of the rotary shaft on one hand and the reference signal on the other hand, a comparator 90 for comparing a time T/2 with t, and a detector 92 for detecting the maximum value of a signal amplitude E, and then its data is provided on a display 94. Thus, on the display 94 is displayed a position of the rotary shaft on its thrust direction, or the degree and the direction of the thrust abrasion of the bearing through the detector 88, while the rotating direction of the rotary shaft is displayed through the comparator 90, and the degree of the radial abrasion of the bearing is displayed through the detector 92. In place of or in addition to the detector 92, a detector 96 for detecting an average of the signal amplitude E may be arranged.

Although the invention has been described with its non-limiting embodiments for illustration only, it is to be understood that a number of modifications and variations may be made without departing from the scope of the invention as defined by the claims. For example, both linear and helical ridges 34 and 36 may be arranged as in the transmitting slits 74 and 76 of Fig. 14.

## Claims

1. An arrangement for monitoring both axial and radial displacements of a rotatable shaft (30) to thereby monitor axial and radial abrasion of a bearing rotatably supporting the shaft (30), comprising:
- at least two markings provided on or in the surface of the shaft (30) and extending along its length;
- a detector (38, 44, 78, 82) spaced from the shaft (30) and responsive to the passage of a marking by outputting a signal the amplitude of which is indicative of the distance of the marking to the detector (38, 44, 78, 82),
**characterized in that**
- the angular distance between the markings increases in axial direction of the shaft (30).

2. Arrangement as claimed in claim 1,
**characterized in that**
the detector (38; 44; 78; 82) also derives the rotating direction by comparing signals derived from said markings on said rotable shaft (30) said markings being adapted such as to generate different signals for different markings.

3. Arrangement as claimed in claim 1 or 2,
**characterized in that**
said markings are ridges (34, 36, 46, 48, 50) on said rotatable shaft (30).

4. Arrangement as claimed in claim 1 or 2,
**characterized in that**
said markings are grooves (40, 43, 52, 54, 58, 60) in said rotatable shaft (30).

5. Arrangment as claimed in claim 1 or 2,
**characterized in that**
said markings comprise a permanent magnet.

6. Arrangment as claimed in claim 1 or 2,
**characterized in that**
said markings comprise a light source.

7. Arrangment as claimed in claim 1 or 2,
**characterized in that**
said markings comprise a light reflective member.

8. Arrangement as claimed in one of the preceding claims,
**characterized in that**
said markings are concave or convex and/or are helically formed along said rotatable shaft (30).

## Patentansprüche

1. Anordnung zur Überwachung der axialen sowie der radialen Verschiebung einer Drehwelle (30) zur Überwachung der axialen sowie der radialen Abnutzung eines Lagers, das die Welle (30) drehbar stützt, die folgendes aufweist:
- wenigstens zwei Markierungen, die an oder in der Oberfläche der Welle (30) vorgesehen sind und sich entlang ihrer Länge erstrecken;
- einen Detektor (38, 44, 78, 82), der von der Welle (30) beabstandet ist und auf den Durchgang einer Markierung reagiert, indem er ein Signal ausgibt, dessen Amplitude den Abstand zwischen der Markierung und dem Detektor (38, 44, 78, 82) angibt,
**dadurch gekennzeichnet**, **daß**
- der Winkelabstand zwischen den Markierungen in Axialrichtung der Welle (30) zunimmt.

2. Anordnung nach Anspruch 1,
**dadurch gekennzeichnet**, **daß**
der Detektor (38; 44; 78; 82) auch die Drehrichtung ableitet, indem von den Markierungen an der Drehwelle (30) abgeleitete Signale verglichen werden, wobei die Markierungen in der Lage sind, für unterschiedliche Markierungen unterschiedliche Signale zu erzeugen.

3. Anordnung nach Anspruch 1 oder 2,
**dadurch gekennzeichnet**, **daß**
die Markierungen Rippen (34, 36, 46, 48, 50) an der Drehwelle (30) sind.

4. Anordnung nach Anspruch 1 oder 2,
**dadurch gekennzeichnet**, **daß**
die Markierungen Nuten (40, 43, 52, 54, 58, 60) in der Drehwelle (30) sind.

5. Anordnung nach Anspruch 1 oder 2,
**dadurch gekennzeichnet**, **daß**
die Markierungen einen Permanentmagneten aufweisen.

6. Anordnung nach Anspruch 1 oder 2,
**dadurch gekennzeichnet**, **daß**
die Markierungen eine Lichtquelle aufweisen.

7. Anordnung nach Anspruch 1 oder 2,
**dadurch gekennzeichnet**, **daß**
die Markierungen ein Licht reflektierendes Element aufweisen.

8. Anordnung nach einem der vorhergehenden Ansprüche,
**dadurch gekennzeichnet**, **daß**
die Markierungen konkav oder konvex und/oder schraubenförmig entlang der Drehwelle (30) ausgebildet sind.

## Revendications

1. Appareil de surveillance des déplacements à la fois dans la direction axiale et dans la direction radiale d'un arbre rotatif (30), afin de surveiller ainsi l'abrasion axiale et radiale d'un palier supportant en rotation l'arbre (30), comprenant :
- au moins deux repères placés sur ou dans la surface de l'arbre (30) et orientés dans le sens de la longueur ;
- un détecteur (38, 44, 78, 82) espacé de l'arbre (30) et sensible au passage d'un repère pour délivrer un signal dont l'amplitude est indicative de la distance entre le repère et le détecteur (38, 44, 78, 82),
caractérisé en ce que
- la distance angulaire entre les repères augmente dans la direction axiale de l'arbre (30).

2. Appareil selon la revendication 1 caractérisé en ce que le détecteur (38, 44, 78, 82) déduit également le sens de rotation en comparant des signaux provenant desdits repères placés sur l'arbre rotatif (30), lesdits repères étant adaptés de manière à créer des signaux différents pour différents repères.

3. Agencement selon la revendication 1 ou 2, caractérisé en ce que lesdits repères sont des nervures (34, 36, 46, 48, 50) sur ledit cadre rotatif (30).

4. Appareil selon la revendication 1 ou 2, caractérisé en ce que lesdits repères sont des rainures (40, 43, 52, 54, 58, 60) usinées dans ledit arbre rotatif (30).

5. Appareil selon la revendication 1 ou 2, caractérisé en ce que lesdits repères sont constitués par un aimant permanent.

6. Appareil selon la revendication 1 ou 2, caractérisé en ce que lesdits repères sont constitués par une source lumineuse.

7. Appareil selon la revendication 1 ou 2, caractérisé en ce que lesdits repères comprennent un élément réfléchissant la lumière.

8. Appareil selon l'une des revendications précédentes, caractérisé en ce que lesdits repères sont concaves ou convexes et/ou en forme d'hélice autour dudit arbre rotatif (30).
